# EUROPÄISCHE PATENTSCHRIFT

(11) **EP 2 640 911 B1**
(45) Veröffentlichungstag und Bekanntmachung des Hinweises auf die Patenterteilung: **03.09.2014**
(21) Anmeldenummer: 11770435.3
(22) Anmeldetag: 17.10.2011
(51) Int. Cl.: E04G 21/04, B66C 23/78

(54) **MOBILES ARBEITSGERÄT MIT ABSTÜTZKONSTRUKTION**
MOBILE WORK APPLIANCE WITH A SUPPORTING STRUCTURE
ENGIN DE TRAVAIL MOBILE AVEC CONSTRUCTION DE SOUTIEN

(30) Priorität: 16.11.2010 DE 102010043957
(43) Veröffentlichungstag der Anmeldung: 25.09.2013
(73) Patentinhaber: Putzmeister Engineering GmbH, 72631 Aichtal (DE)
(72) Erfinder: FÜGEL, Dietmar, 72649 Wolfschlugen (DE)
(74) Vertreter: Wolf, Eckhard
(86) Internationale Anmeldenummer: PCT/EP2011/068068
(87) Internationale Veröffentlichungsnummer: WO 2012/065795

(56) Entgegenhaltungen:
- WO-A1-2005/042319
- DE-A1-102006 006 978
- DE-B- 1 000 981
- DE-B- 1 164 056
- GB-A- 865 102
- US-A- 2 797 826

## Beschreibung

Die Erfindung betrifft ein mobiles Arbeitsgerät, insbesondere eine Autobetonpumpe, mit einem Fahrgestell, mit zwei vorderen und zwei rückwärtigen, von einer Transportstellung in mindestens eine Arbeitsstellung relativ zum Fahrgestell ausfahrbaren und mit jeweils einem Stützbein auf einem Untergrund unter Anhebung des Fahrgestells abstützbaren Stützauslegern und mit einer Antriebseinheit zur Ansteuerung von Arbeitsaggregaten und/oder der Stützausleger, wobei zumindest einer der ein Träger- oder Hohlkammerprofil aufweisenden Stützausleger einen Querdurchbruch aufweist.

Bei fahrbaren Betonpumpen umfassen die Arbeitsaggregate u.a. einen Mastbock mit einem Verteilermast sowie eine Kernpumpe mit Materialaufgabebehälter. Die Kernpumpe mündet in eine Förderleitung, die über den Verteilermast geführt ist. Je nach Pumpenmodell umfasst die Antriebseinheit eine oder mehrere Hydraulikpumpen sowie weitere Hilfspumpen, beispielsweise für den Antrieb des Rührwerks im Materialaufgabebehälter der Kernpumpe. Die Stützausleger haben vor allem die Aufgabe, das Arbeitsgerät in der Arbeitsstellung auf dem Untergrund in allen Stellungen der Arbeitsaggregate zuverlässig und kippungsfrei abzustützen. Dementsprechend sind die Anforderungen an die Festigkeit der Stützausleger relativ groß. Für ihre Herstellung werden üblicherweise massive Trägerprofile oder Hohlkammerprofile aus Stahl verwendet. Die bei bekannten Arbeitsgeräten der eingangs angegebenen Art (DE-B 1 000 981 und WO-A 2005/042319) vorgesehenen Querdurchbrüche sorgen dafür, dass die betreffenden Stützausleger unter Beibehaltung ihrer Festigkeit und Stabilität leichter ausgebildet sind. Mit den Querdurchbrüchen wird einmal eine Materialersparnis erzielt. Zum anderen haben die Querdurchbrüche mit ihren Durchbruchwänden in dem Stützausleger eine Aussteifungsfunktion. Damit wird jedoch nicht verhindert, dass die Stützausleger auf dem Fahrgestell auf Kosten der effektiven Ladefläche viel Platz in Anspruch nehmen.

Ausgehend hiervon liegt der Erfindung die Aufgabe zugrunde, zumindest einen Teil der Stützausleger mit einem raumsparenden Zusatznutzen auszustatten.

Zur Lösung dieser Aufgabe werden die in den Ansprüchen 1 und 6 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass mindestens ein Querdurchbruch als ein- oder beidseitig offenes, mittels einer Abdeckung verschließbares Gehäuse ausgebildet ist. In dem Gehäuse kann beispielsweise ein Hilfsaggregat der Antriebseinheit angeordnet werden. Das Hilfsaggregat ist bevorzugt als Hydraulikkühler der überwiegend hydraulisch betätigten Antriebseinheit ausgebildet. Es kann über Hydraulikleitungen, Hydraulikschläuche und/oder Elektrokabel mit einer fahrgestellfest angeordneten Zentralsteuerung oder mit der Antriebseinheit verbunden sein. Ein weiterer Zusatznutzen kann dadurch erzielt werden, dass zumindest einer der als Hohlkammerprofil ausgebildeten und einen Querdurchbruch aufweisenden Stützausleger einen durch die Hohlkammer gebildeten Flüssigkeitstank aufweist.

Gemäß einer weiteren bevorzugten Ausgestaltung der Erfindung sind die zum Teil mit Querdurchbrüchen versehenen Stützausleger und die Arbeitsaggregate an einem fahrgestellfest montierten Aufbaurahmen angeordnet.

Im Folgenden wird die Erfindung anhand eines in der Zeichnung in schematischer Weise dargestellten Ausführungsbeispiels näher erläutert. Es zeigen
- Fig. 1a und b: eine schaubildliche Darstellung einer Autobetonpumpe mit eingeklapptem und ausgeklapptem rückwärtigem Stützausleger;

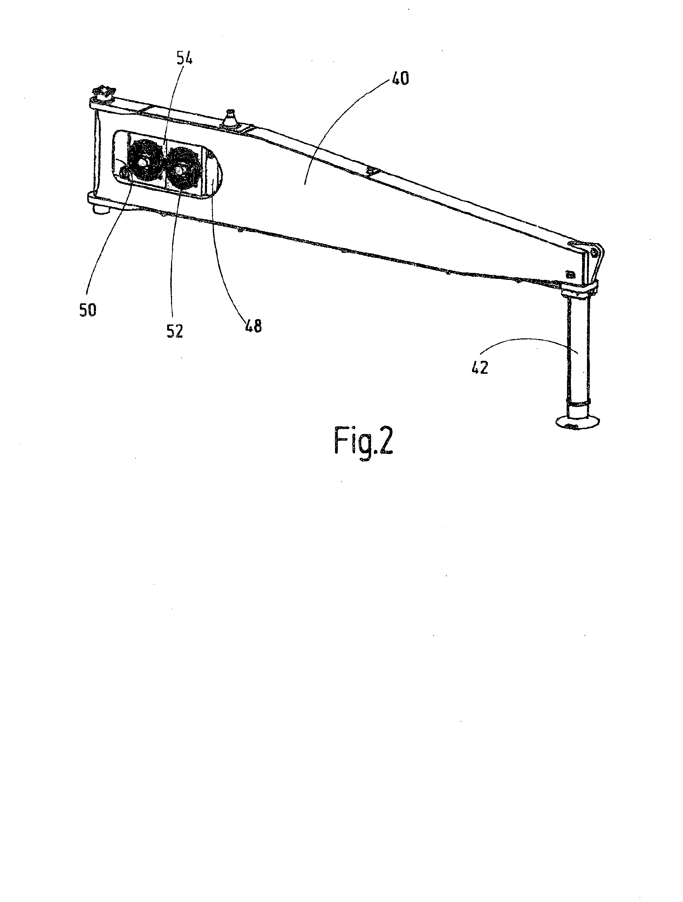

- Fig. 2: eine schaubildliche Seitenansicht des rückwärtigen Stützauslegers mit in einem Querdurchbruch eingebautem Hilfsaggregat.

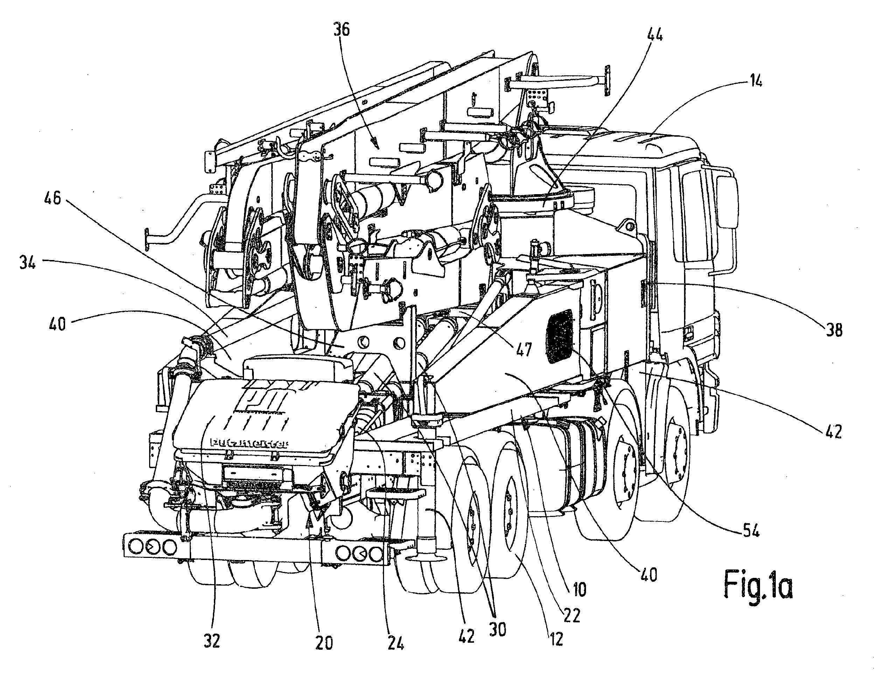

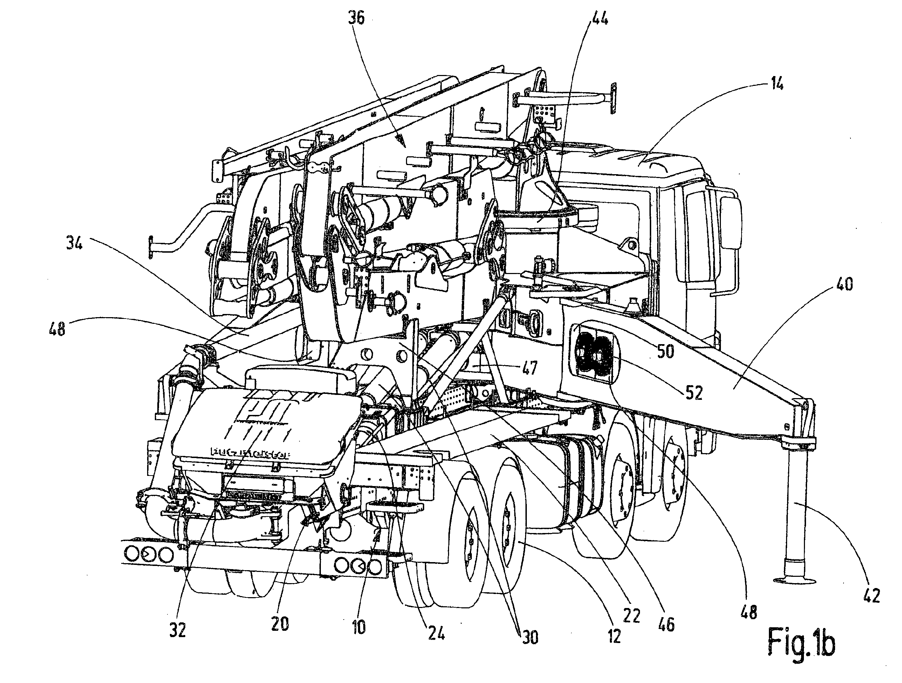

Die in Fig. 1 a und b dargestellte fahrbare Betonpumpe weist ein LKW-Chassis 10 mit einem motorgetriebenen Fahrgestell 12 und einem Führerhaus 14 auf. Das Chassis 10 trägt eine Betonpumpe 20, die über einen Aufbaurahmen 22 mit dem Fahrgestell 12 verbunden ist. Der Betonpumpenaufbau umfasst im Wesentlichen eine Kernpumpe 24 mit zwei hydraulisch angetriebenen Förderzylindern 30 und einem am freien Ende der Förderzylinder 30 starr angeordneten Materialaufgabebehälter 32. Weiter umfasst der Aufbau eine Druckförderleitung 34, die über einen als Knickmast ausgebildeten Verteilermast 36 geführt ist. Der Verteilermast 36 ist auf einem in der Nähe des Führerhauses 14 mit dem Aufbaurahmen 22 starr verbundenen Mastdrehlagerbock 44 um eine vertikale Achse drehbar gelagert. Am rückwärtigen Ende des Aufbaurahmens 22 ist ein Mastauflager 46 angeordnet, auf welchem der Verteilermast 36 in dem dargestellten eingeklappten Fahrzustand aufliegt. Weiter ist eine Abstützvorrichtung mit ausstellbaren vorderen und rückwärtigen Stützauslegern 38,40 vorgesehen. Beim Betonierbetrieb werden die Stützausleger im Sinne der Fig. 1b ausgestellt und unter Anhebung des Fahrgestells 12 mit ihren teleskopierbaren Stützbeinen 42 auf dem Erdboden abgestützt. Der hydraulische Antrieb der Kernpumpe 24, des Verteilermasts 36 und der Stützausleger 38,40 erfolgt über eine Antriebseinheit 47 im Wesentlichen bestehend aus Hydraulikpumpen, die über einen vom Fahrzeugmotor kommenden Antriebsstrang antreibbar sind.

Eine Besonderheit der Erfindung besteht darin, dass die beiden rückwärtigen Stützausleger 40 als Hohlkammerprofilteile ausgebildet sind, die in ihrem vorderen Bereich einen Querdurchbruch 48 mit einer umlaufenden Durchbruchwand 50 aufweisen. Dem Querdurchbruch 48 kommt dabei sowohl eine gewichtsmindernde als auch eine aussteifende Funktion zu. Im rechten rückwärtigen Stützausleger 40 bildet der Querdurchbruch 48 ein Gehäuse, in welchem ein Hilfsaggregat 52 angeordnet ist, das beispielsweise über Hydraulikleitungen, Hydraulikschläuche und/oder Elektrokabel mit der Antriebseinheit 47 verbunden ist. Das Hilfsaggregat 52 ist beispielsweise als Hydraulikkühler ausgebildet. Bei dem gezeigten Ausführungsbeispiel ist der den Hydraulikkühler aufweisende Querdurchbruch 48 einseitig nach innen offen und auf der Außenseite durch eine Abdeckung 54 verschlossen. Grundsätzlich kann einer der Querdurchbrüche 48 auch als Stauraum beispielsweise zur Aufnahme von Werkzeugkästen, Kupplungen, Kanthölzern oder dergleichen verwendet werden.

Zusammenfassend ist folgendes festzuhalten: Die Erfindung bezieht sich auf ein mobiles Arbeitsgerät, insbesondere eine Autobetonpumpe. Das Arbeitsgerät umfasst im Wesentlichen ein Fahrgestell 12, zwei vordere und zwei rückwärtige, von einer Transportstellung in mindestens eine Arbeitsstellung relativ zum Fahrgestell 12 ausfahrbare und mit jeweils einem Stützbein 42 auf einem Untergrund unter Anhebung des Fahrgestells abstützbare Stützausleger 38,40 sowie eine Antriebseinheit 47 zur Ansteuerung von Arbeitsaggregaten und/oder der Stützausleger. Eine Besonderheit der Erfindung besteht darin, dass zumindest einer der ein Träger- oder Hohlkammerprofil aufweisenden Stützausleger 40 einen Querdurchbruch 48 aufweist, der beispielsweise als Gehäuse für ein Hilfsaggregat 52 der Antriebseinheit ausgebildet sein kann.

### Bezugszeichenliste:

- 10: Chassis
- 12: Fahrgestell
- 14: Führerhaus
- 20: Betonpumpe
- 22: Aufbaurahmen
- 24: Kernpumpe
- 30: Förderzylinder
- 32: Materialaufgabebehälter
- 34: Druckförderleitung
- 36: Verteilermast
- 38,40: Stützausleger
- 42: Stützbein
- 44: Mastdrehlagerbock
- 46: Mastauflagerbock
- 47: Antriebseinheit
- 48: Querdurchbruch
- 50: Durchbruchwände
- 52: Hilfsaggregat
- 54: Abdeckung

## Patentansprüche

1. Mobiles Arbeitsgerät, insbesondere Autobetonpumpe mit einem Fahrgestell (12), mit zwei vorderen und zwei rückwärtigen, von einer Transportstellung in mindestens eine Arbeitsstellung relativ zum Fahrgestell (12) ausfahrbaren und mit jeweils einem Stützbein (42) auf einem Untergrund unter Anhebung des Fahrgestells (12) abstützbaren Stützauslegern (38,40) und mit einer Antriebseinheit (47) zur Ansteuerung von Arbeitsaggregaten und/oder der Stützausleger (38,40), wobei zumindest einer der ein Träger- oder Hohlkammerprofil aufweisenden Stützausleger (40) einen Querdurchbruch (48) aufweist, **dadurch gekennzeichnet, dass** mindestens ein Querdurchbruch (48) als
Gehäuse ausgebildet ist, das eine Abdeckung (54) zum Verschließen des Gehäuses aufweist.

2. Arbeitsgerät nach Anspruch 1, **dadurch gekennzeichnet, dass** in jedem der rückwärtigen Stützausleger (40) mindestens ein Querdurchbruch (48) angeordnet ist.

3. Arbeitsgerät nach Anspruch 1 oder 2, **dadurch gekennzeichnet, dass** zumindest einer der als Hohlkammerprofil ausgebildeten und einen Querdurchbruch (48) aufweisenden Stützausleger (40) einen durch die Hohlkammer gebildeten Flüssigkeitstank aufweist.

4. Arbeitsgerät nach einem der Ansprüche 1 bis 3, **dadurch gekennzeichnet, dass** der Querdurchbruch (48) in dem Stützausleger mit seinen Durchbruchwänden (50) als Aussteifungsmittel ausgebildet ist.

5. Arbeitsgerät nach einem der Ansprüche 1 bis 4, **dadurch gekennzeichnet, dass** der Querdurchbruch (48) mindestens eines der Stützausleger (40) als Gehäuse für ein Hilfsaggregat (52) der Antriebseinheit ausgebildet ist.

6. Mobiles Arbeitsgerät, insbesondere Autobetonpumpe mit einem Fahrgestell (12), mit zwei vorderen und zwei rückwärtigen, von einer Transportstellung in mindestens eine Arbeitsstellung relativ zum Fahrgestell (12) ausfahrbaren und mit jeweils einem Stützbein (42) auf einem Untergrund unter Anhebung des Fahrgestells (12) abstützbaren Stützauslegern (38,40) und mit einer Antriebseinheit (47) zur Ansteuerung von Arbeitsaggregaten und/oder der Stützausleger (38,40), wobei zumindest einer der ein Träger- oder Hohlkammerprofil aufweisenden Stützausleger (40) einen Querdurchbruch (48) aufweist, **dadurch gekennzeichnet, dass** der Querdurchbruch (48) mindestens eines der Stützausleger (40) als Gehäuse ausgebildet ist, in dem ein Hilfsaggregat (52) der Antriebseinheit angeordnet ist.

7. Arbeitsgerät nach Anspruch 5 oder 6, **dadurch gekennzeichnet, dass** das Hilfsaggregat (52) als Hydraulikkühler ausgebildet ist.

8. Arbeitsgerät nach einem der Ansprüche 5 bis 7, **dadurch gekennzeichnet, dass** das Hilfsaggregat (52) über Hydraulikleitungen, Hydraulikschläuche und/oder Elektrokabel mit einer fahrgestellfest angeordneten Zentralsteuerung oder mit der Antriebseinheit (47) verbunden ist.

9. Arbeitsgerät nach einem der Ansprüche 1 bis 8, **dadurch gekennzeichnet, dass** die zumindest teilweise mit einem Querdurchbruch (48) versehenen Stützausleger (38,40) und die Arbeitsaggregate (24,36) an einem fahrgestellfest montierten Aufbaurahmen (22) angeordnet sind.

## Claims

1. Mobile work device, particularly a mobile concrete pump, having a chassis (12), having two front and two rear support booms (38, 40) that can be moved out from a transport position into at least one working position relative to the chassis (12) and have a support leg (42) that can be supported on a substratum, in each instance, raising the chassis (12), and having a drive unit (47) for controlling work assemblies and/or the support booms (38, 40), wherein at least one of the support booms (40) having a beam profile or hollow-chamber profile has a transverse perforation (48), **characterized in that** at least one transverse perforation (48) is configured as a housing that can be closed off by means of a cover (54).

2. Work device according to claim 1, **characterized in that** at least one transverse perforation (48) is disposed in each of the rear support booms (40).

3. Work device according to claim 1 or 2, **characterized in that** at least one of the support booms (40) configured as a hollow-chamber profile and having a transverse perforation (48) has a liquid tank formed by the hollow chamber.

4. Work device according to one of claims 1 to 3, **characterized in that** the transverse perforation (48) in the support boom is configured as a reinforcement means, with its perforation walls (50).

5. Work device according to one of claims 1 to 4, **characterized in that** the transverse perforation (48) of at least one of the support booms (40) is configured as a housing for an ancillary assembly (52) of the drive unit.

6. Mobile work device, particularly a mobile concrete pump, having a chassis (12), having two front and two rear support booms (38, 40) that can be moved out from a transport position into at least one working position relative to the chassis (12) and have a support leg (42) that can be supported on a substratum, in each instance, raising the chassis (12), and having a drive unit (47) for controlling work assemblies and/or the support booms (38, 40), wherein at least one of the support booms (40) having a beam profile or hollow-chamber profile has a transverse perforation (48), **characterized in that** the transverse perforation (48) of at least one of the support booms (40) is configured as a housing for an ancillary assembly (52) of the drive unit.

7. Work device according to claim 5 or 6, **characterized in that** the ancillary assembly (52) is configured as a hydraulic cooler.

8. Work device according to one of claims 5 to 7, **characterized in that** the ancillary assembly (52) is connected with a central control fixed in place on the chassis or with the drive unit (47) by way of hydraulic lines, hydraulic hoses and/or electrical cables.

9. Work device according to one of claims 1 to 8, **characterized in that** the support booms (38, 40) provided at least in part with a transverse perforation (48) and the work assemblies (24, 36) are disposed on a superstructure frame (22) fixed in place on the chassis.

## Revendications

1. Engin mobile de travail, notamment pompe à béton autotractée comprenant un châssis de roulement (12) ; deux stabilisateurs de soutien (38, 40) antérieurs et deux postérieurs, qui peuvent être déployés par rapport audit châssis de roulement (12) vers au moins une position de travail, à partir d'une position de transport, et peuvent prendre appui sur une structure sous-jacente par une jambe de support (42) respectivement, avec soulèvement dudit châssis de roulement (12) ; et une unité d'entraînement (47) dévolue à l'activation de groupes de travail et/ou desdits stabilisateurs de soutien (38, 40), au moins l'un desdits stabilisateurs de soutien (40), présentant un profilé de support ou un profilé à chambre creuse, étant percé d'un évidement transversal (48), **caractérisé par le fait qu'**au moins un évidement transversal (48) est réalisé sous la forme d'un boîtier doté d'un couvercle (54) dédié à l'obturation dudit boîtier.

2. Engin de travail selon la revendication 1, **caractérisé par le fait qu'**au moins un évidement transversal (48) est pratiqué dans chacun des stabilisateurs de soutien (40) postérieurs.

3. Engin de travail selon la revendication 1 ou 2, **caractérisé par le fait qu'**au moins l'un des stabilisateurs de soutien (40), réalisés sous la forme d'un profilé à chambre creuse et présentant un évidement transversal (48), est pourvu d'un réservoir de liquide formé par la chambre creuse.

4. Engin de travail selon l'une des revendications 1 à 3, **caractérisé par le fait que** l'évidement transversal (48), pratiqué dans le stabilisateur de soutien, est réalisé sous la forme d'un moyen de rigidification procuré par ses parois (50).

5. Engin de travail selon l'une des revendications 1 à 4, **caractérisé par le fait que** l'évidement transversal (48) d'au moins l'un des stabilisateurs de soutien (40) est réalisé sous la forme d'un boîtier affecté à un groupe auxiliaire (52) de l'unité d'entraînement.

6. Engin mobile de travail, notamment pompe à béton autotractée comprenant un châssis de roulement (12) ; deux stabilisateurs de soutien (38, 40) antérieurs et deux postérieurs, qui peuvent être déployés par rapport audit châssis de roulement (12) vers au moins une position de travail, à partir d'une position de transport, et peuvent prendre appui sur une structure sous-jacente par une jambe de support (42) respectivement, avec soulèvement dudit châssis de roulement (12) ; et une unité d'entraînement (47) dévolue à l'activation de groupes de travail et/ou desdits stabilisateurs de soutien (38, 40), au moins l'un desdits stabilisateurs de soutien (40), présentant un profilé de support ou un profilé à chambre creuse, étant percé d'un évidement transversal (48), **caractérisé par le fait que** l'évidement transversal (48) d'au moins l'un des stabilisateurs de soutien (40) est réalisé sous la forme d'un boîtier, dans lequel est logé un groupe auxiliaire (52) de l'unité d'entraînement.

7. Engin de travail selon la revendication 5 ou 6, **caractérisé par le fait que** le groupe auxiliaire (52) est réalisé sous la forme d'un refroidisseur hydraulique.

8. Engin de travail selon l'une des revendications 5 à 7, **caractérisé par le fait que** le groupe auxiliaire (52) est relié, par l'intermédiaire de conduits hydrauliques, de tuyaux hydrauliques et/ou de câbles électriques, à l'unité d'entraînement (47) ou à une commande centralisée consignée à demeure sur le châssis de roulement.

9. Engin de travail selon l'une des revendications 1 à 8, **caractérisé par le fait que** les stabilisateurs de soutien (38, 40) au moins partiellement dotés d'un évidement transversal (48), et les groupes de travail (24, 36), sont disposés sur un cadre d'installation (22) monté fixe sur le châssis de roulement.
